# FASCICULE DE BREVET EUROPEEN

(11) **EP 0 426 543 B1**
(45) Date de publication et mention de la délivrance du brevet: **16.03.1994**
(21) Numéro de dépôt: 90403026.9
(22) Date de dépôt: 26.10.1990
(51) Int. Cl.: G01S 13/78, G01S 13/44

(54) **Dispositif de détection des signaux de répondeurs interrogés par un radar secondaire en présence de phénomènes de multitrajets**
Vorrichtung zur Detektion von Signalen eines von einem Sekundärradar abgefragten Antwortgeräts in Anwesenheit von Multitrajektphänomenen
Apparatus for detection of signals from interrogated responders by secondary radar in the presence of multitrajectory phenomena

(30) Priorité: 03.11.1989 FR 8914416
(43) Date de publication de la demande: 08.05.1991
(73) Titulaire: THOMSON-CSF, 75008 Paris (FR)
(72) Inventeur: Bourdeau, Alain, F-92045 Paris la Défense (FR); de Volder, Claude, F-92045 Paris la Défense (FR)
(74) Mandataire: Beylot, Jacques

(56) Documents cités:
- EP-A- 0 055 151
- IEE, INTERNATIONAL CONFERENCE RADAR'87, London, 19-21 octobre 1987, pages 237-241; A.J. McDEVITT et al.: "Operation of monopulse SSR at difficult sites"
- ALTA FREQUENZA, vol. 52, no. 5, 1983, pages 350-364, Milano, IT; G. BENELLI et al.: "Angle estimation and discrimination of monopulse SSR raplies in the presence of synchronous interference"

## Description

La présente invention est relative à la surveillance du trafic aérien notamment civil et, plus particulièrement, aux systèmes coopératifs sol avion qui permettent de situer en distance radiale et en azimut les avions présents dans un certain volume et de les interroger.

Ces systèmes coopératifs comportent un radar de surveillance dit secondaire qui émet par une antenne directive et rotative des impulsions d'interrogation modulées en amplitude et en phase à la fréquence de 1030 MHz et des répondeurs ou transpondeurs embarqués à bord d'avions qui répondent par des trains d'impulsions modulées en amplitude à la fréquence de 1090 MHz. Pour l'aviation civile, interrogations et réponses peuvent se faire en différents modes, actuellement les modes A et C et ultérieurement le mode S qui se distinguent notamment par les formats des trains d'impulsions d'interrogation ou de réponse. Un tel système est connu par exemple du document EP-A-0 055 151.

Dans le mode S qui permet une interrogation sélective des avions par l'emploi d'un numéro d'identification propre à chaque avion et qui résout les problèmes d'encombrement de trafic rencontrés avec les modes A et C, la réponse se compose d'un préambule formé d'une suite de quatre impulsions dont les positions sont invariables, suivi d'un bloc de données composé de 56 ou 112 impulsions de 0,5 µs codées en modulation de position sur des intervalles de temps successifs de 1 µs. Un codage redondant à contrôle de parité au niveau du bloc de données permet un décodage sans erreur d'un message localisé par la détection des impulsions de préambule lorsqu'il a subi une détérioration sur une zone de moins de 24 µs.

Il s'avère que la détérioration du message dépasse souvent les 24 µs notamment dans les cas de multitrajets où elle peut atteindre la totalité du message et dans les cas d'imbrication d'une réponse en mode S avec plusieurs réponses en mode classique A ou C.

Les phénomènes de multitrajets se produisent fréquemment en zone terminale lorsque l'avion est près du sol et du radar secondaire d'interrogation. Ils sont dus à des réflexions de la réponse du transpondeur sur des bâtiments et sur le sol qui arrivent décalées dans le temps par rapport à la réponse directe et perturbent celle-ci.

La présente invention a pour but d'améliorer la détection des messages contenus dans ces réponses en présence de perturbations radioélectriques.

Elle a pour objet un dispositif de détection des signaux de répondeurs interrogés par un radar secondaire en présence de phénomènes de multitrajets, signaux qui sont formés chacun d'un train d'impulsions arrangé selon un format déterminé avec des impulsions de formatage repérant la position des impulsions de données. Ce dispositif comporte :
- un circuit d'identification de format d'un signal de répondeur pourvu de moyens de détection des impulsions de formatage contenues dans le signal de réception,
- une base de temps synchronisée par le circuit d'identification de format et pourvue de moyens pour engendrer des signaux de cadencement repérant dans le signal de réception les intervalles de temps éventuellement occupés par des impulsions de données d'un signal de répondeur, leurs milieux ainsi que des plages centrées sur ces milieux,
- et un dispositif (2) de détection d'impulsions de données dans le signal de réception comprenant lui-même :
- un circuit de détermination de présomption d'impulsions de données dans le signal de réception, cadencé par la base de temps et pourvu de moyens pour établir une corrélation entre un premier échantillon du niveau du signal de réception pris au milieu de chaque intervalle de temps éventuellement occupé par une impulsion de données d'un signal de répondeur et un deuxième et un troisième échantillons de niveau du signal de réception pris au cours de ces intervalles de temps en des instants encadrant celui de prise du premier échantillon, et de moyens pour engendrer un coefficient de pondération associé à chaque valeur prise par le premier échantillon représentant une probabilité de présence d'impulsion de donnée d'autant plus grande que ladite corrélation est élevée,
- un circuit de détermination d'un niveau de référence du signal de réception déterminant un niveau d'amplitude de référence d'impulsions pour chacun des signaux de répondeur dont le format a été identifié dans le signal de réception par le circuit d'identification de format, cadencé par la base de temps et pourvu de moyens pour sélectionner le niveau pris majoritairement par le signal de réception au milieu des intervalles de temps éventuellement occupés par des impulsions de données d'un signal de répondeur en pondérant la fréquence d'apparition des niveaux considérés par les coefficients de pondération élaborés par le circuit de détermination de présomption d'impulsions de données et,
- un circuit de détection d'impulsions de données dans le signal de réception pour chacun des signaux de répondeur dont le format a été identifié dans le signal de réception par le circuit d'identification de format, comportant des moyens de reconnaissance d'impulsions chaque fois que le niveau du signal de réception au milieu d'un intervalle de temps éventuellement occupé par une impulsion appartient à une certaine plage de valeur centrée autour du niveau de référence délivré par le circuit de détermination du niveau de référence du signal de réception pour le signal de répondeur considéré.

Le circuit de détermination du niveau de référence du signal de réception est en outre avantageusement pourvu de moyens déterminant le niveau de référence à partir de la moyenne des valeurs qui sont prises, avec des fréquences pondérées par les coefficients de pondération élaborés par le circuit de détermination de présomption d'impulsions de données, par les niveaux du signal de réception au milieu des intervalles de temps éventuellement occupés par des impulsions de données d'un signal de répondeur et qui appartiennent à une plage de valeurs atteintes un nombre de fois tenant compte des coefficients de pondération, au moins égal à la moitié du nombre de fois où est atteinte la valeur du niveau majoritaire.

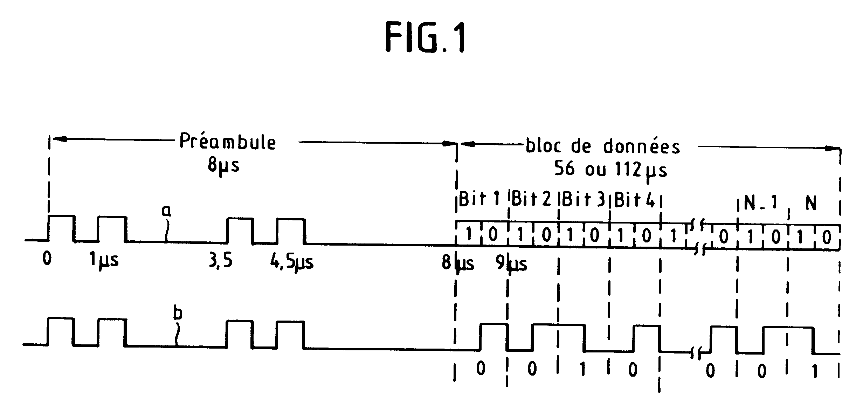

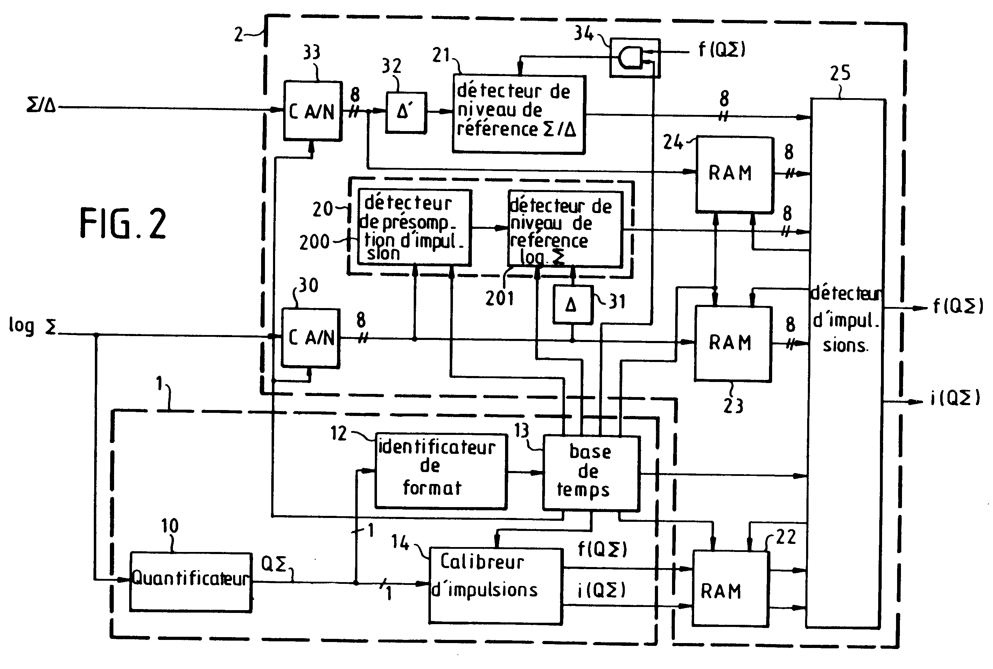

D'autres caractéristiques et avantages de l'invention ressortiront de la description ci-après d'un mode de réalisation donné à titre d'exemple. Cette description sera faite en regard du dessin dans lequel :
- une figure 1 est un diagramme de temps illustrant la forme d'une réponse de répondeur en mode S et
- une figure 2 est un schéma synoptique d'un dispositif de détection selon l'invention associé à un dispositif de remise en forme.

Le dispositif de détection selon l'invention va être décrit dans le cadre du traitement des signaux vidéo de réception provenant des voies somme et différence d'un radar secondaire monopulse interrogeant des répondeurs en mode S.

La courbe a de la figure 1 représente le format d'un signal de répondeur en mode S et la courbe b en donne un exemple particulier. Ce signal est constitué d'un train d'impulsions qui découpe en amplitude une fréquence porteuse à 1090 MHz et qui est formé d'un préambule de 8 µs suivi d'un bloc de données de 56 ou 112 µs. Chaque impulsion a une durée de 0,5 µs et occupe une période de 1 µs. La préambule renferme deux paires d'impulsions successives à positions fixes qui permettent d'identifier le format d'une réponse en mode S. Le bloc de données contient une suite de 56 ou 112 impulsions qui sont codées en modulation de position et occupent chacune, selon la valeur binaire représentée 1 ou 0, l'un ou l'autre de deux intervalles de temps successifs de 0,5 µs constituant une période Baud de 1 µs.

La figure 2 est un schéma synoptique d'un dispositif de détection selon l'invention qui est associé à un dispositif de remise en forme et qui traite à la fois le signal vidéo de réception de la voie somme d'un radar secondaire monopulse démodulé et mis sous forme logarithmique, signal qui sera dénommé dans la suite signal de réception Log Σ, et le quotient des signaux vidéo de réception des voies somme Σ et différence Δ démodulés du même radar secondaire monopulse qui sera dénommé dans la suite signal d'écartométrie Σ/Δ car il permet de préciser la direction du répondeur à l'origine de la réponse à l'intérieur du lobe principal d'illumination de l'antenne du radar secondaire monopulse.

Le dispositif de remise en forme 1 fonctionne à l'aide du seul signal de réception Log Σ. Il peut se décomposer en un circuit quantificateur 10 suivi d'un circuit d'identification de format 12, d'une base de temps 13 et d'un circuit de calibrage d'impulsions 14.

Le circuit quantificateur 10 met le signal de réception Log Σ sous une forme binaire Q Σ en séparant les impulsions superposées qu'il contient du fait des recouvrements de réponses dus aux phénomènes multitrajets et aux imbrications avec des réponses en mode classique A ou C. Il procède par comparaison du signal de réception LogΣ avec un seuil autoadaptatif à -6dB. Sa structure est connue et décrite par exemple dans le brevet français n° 2.495.785 déposé le 9 Décembre 1980.

Le circuit d'identification de format 12 détecte le préambule d'une réponse en mode S en vérifiant, dans le signal quantifié Q Σ numérisé, la présence des deux paires d'impulsions de préambule par exemple en testant la présence d'un front au début de chaque paire d'impulsions, de quatre états hauts au niveau des quatre impulsions et d'un trou entre les impulsions de chaque paire.

La base de temps 13 est synchronisée par le circuit d'identification de format 12 et délivre divers signaux de cadencement dont la fréquence de 16 MHz rythmant l'échantillonnage et un signal à la fréquence de 2 MHz apparaissant dans une fenêtre délimitant la durée d'un bloc de données suivant un préambule détecté de réponse en mode S et repérant dans un bloc de données les périodes Baud et, à l'intérieur de celles-ci, les deux intervalles de temps successifs où doit se situer une impulsion de données.

Le circuit de calibrage d'impulsions, 14 est synchronisé par la base de temps 13, opère sur le signal quantifié QΣ numérisé et fournit à la fois des impulsions calibrées de bloc de données f(QΣ) et une information i(QΣ) sur la qualité du calibrage effectué. Pour calibrer les impulsions d'un bloc de données, il procède dans chaque période Baud à une première sommation des huit échantillons numériques du signal de réception quantifié QΣ occupant le premier intervalle de temps de 0,5 µs puis à une deuxième sommation des huit échantillons numériques suivants du signal de réception quantifié QΣ occupant le deuxième intervalle de temps de 0,5 µs. Il compare ensuite les deux sommations et engendre une impulsion calibrée dans l'intervalle de temps correspondant à la sommation la plus forte si l'écart entre les deux sommations est supérieur à un certain seuil représentant un niveau de bruit admissible. Dans le cas où la différence entre les deux sommations est supérieure au seuil, il engendre, outre l'impulsion calibrée, une information de qualité i(QΣ) correcte. Dans le cas inverse, il engendre systématiquement une impulsion calibrée dans l'un des intervalles de temps par exemple le premier et émet une information de qualité i(QΣ) incorrecte. Les impulsions calibrées du bloc de données f(QΣ) sont transmises avec les informations de qualité i(QΣ) à un calculateur qui décode les données en ne tenant pas compte des impulsions calibrées correspondant à des informations de qualité incorrectes.

Le dispositif de détection 2 permet de corriger la position d'un certain nombre d'impulsions calibrées de données fournies par le dispositif de remise en forme 1 avec des informations de qualité incorrectes. Il fonctionne à l'aide du signal de réception Log Σ et du signal d'écartométrie Σ /Δ. Il comporte principalement un dispositif 20 déterminant un niveau d'amplitude de référence d'impulsions sur la durée d'une réponse dans le signal de réception LogΣ, un circuit 21 déterminant un niveau d'amplitude de référence d'impulsions sur la durée d'une réponse dans le signal d'écartométrie Σ/Δ, une batterie de mémoires 22, 23, 24 mémorisant sur la durée d'une réponse, les impulsions calibrées de bloc de données f(QΣ) et les informations de qualité i(QΣ) délivrées par le dispositif de remise en forme 1, ainsi que le signal de réception Log Σ et le signal d'écartométrie Σ /Δ, et un circuit de détection d'impulsion 25 opérant à partir du signal de réception Log Σ et de son niveau d'amplitude de référence d'impulsion, et, éventuellement à partir du signal d'écartométrie Σ/Δ et de son niveau de référence d'impulsion chaque fois que le dispositif de mise en forme 1 envoie une information de qualité i(QΣ) incorrecte.

Le dispositif 20 déterminant un niveau d'amplitude de référence d'impulsions dans le signal de réception LogΣ se compose essentiellement d'un circuit 200 de détermination de présomption d'impulsions et d'un circuit 201 de détermination d'un niveau de référence.

Le circuit 200 de détermination de présomption d'impulsions est cadencé par la base de temps 13 et connecté à la suite d'un convertisseur analogique/numérique 30 qui échantillonne le signal de réception LogΣ sous une forme numérique à une cadence de 16 MHz délivrée par la base de temps 13. Il recherche dans le signal de réception Log Σ, au milieu de chaque intervalle de temps de 0,5 µs d'un bloc de données, des plages à niveau constant ou presque constant correspondant à des sommets d'impulsion qui contrastent du fait de l'existence de la porteuse à ces instants, avec les plages bruitées à niveau fluctuant des intervalles entre impulsions où la porteuse est supprimée et où l'on trouve des traînes d'impulsion. Pour ce faire, il comporte des moyens pour sélectionner trois échantillons successifs du niveau du signal de réception LogΣ au voisinage du milieu de chaque intervalle de temps de 0,5 µs du bloc de données, les corréler et délivrer un coefficient de pondération valant 3 si les valeurs des trois échantillons de niveau se correspondent à ± 1 près, 2 si seules les valeurs de deux échantillons de niveau se correspondent à ± 1 près et 1 dans les autres cas.

Le circuit 201 de détermination d'un niveau de référence du signal de réception LogΣ est connecté en entrée à la sortie du circuit de 200 de détermination de présomption d'impulsions et par l'intermédiaire d'un circuit à retard 31 à la sortie du convertisseur analogique/numérique 30. Il est également cadencé par la base de temps 13 qui prend en compte le retard du circuit à retard 31 destiné à compenser le temps de calcul d'un coefficient de pondération. Il détermine le niveau pris majoritairement par le signal de réception LogΣ au milieu de chaque intervalle de temps de 0,5 µs d'un bloc de données en pondérant la fréquence d'apparition de ces niveaux par les coefficients de pondération élaborés par le circuit 200 de détermination de présomption d'impulsions puis adopte pour niveau de référence la moyenne des valeurs de niveau appartenant à une plage de valeurs atteintes par les niveaux un nombre de fois qui, compte tenu des coefficients de pondération, est au moins égal à la moitié de celui où est atteinte la valeur du niveau majoritaire. Pour ce faire, il comporte un ensemble de compteurs en nombre égal aux différentes valeurs possibles de niveau, qui sont adressés par la valeur du niveau de signal échantillonnée au milieu de chaque intervalle de temps de 0,5 µs d'un bloc de données et incrémentés de la valeur 1, 2 ou 3 du coefficient de pondération associé délivré par le circuit 200 de détermination de présomption d'impulsions de données, et un circuit logique d'analyse de l'histogramme des échantillons de niveau inscrits dans l'ensemble des compteurs qui délimite en fin de chaque bloc de données une plage de compteurs situés de part et d'autre du compteur renfermant la valeur maximale et ayant des contenus supérieurs ou égaux à la moitié de cette valeur maximale pour rejeter de l'histogramme les valeurs de niveau erronées ne correspondant manifestement pas à des impulsions de données, et qui détermine la moyenne des valeurs de niveau adressant des compteurs dans ladite plage en tenant compte du nombre de fois où chacun de ces compteurs a été adressé.

Le circuit 21 déterminant un niveau d'amplitude de référence d'impulsions dans le signal d'écartométrie Σ /Δ est connecté en entrée par l'intermédiaire d'un circuit à retard 32 à la sortie d'un convertisseur analogique/numérique 33 qui échantillonne le signal d'écartométrie Σ / Δ à une cadence de 16 MHz délivrée par la base de temps 13. Il est également cadencé par la base de temps 13 par l'intermédiaire d'un circuit logique 34 placé sous le contrôle du circuit de calibrage d'impulsions 14, la base de temps 13 prenant en compte le retard du circuit à retard 32 destiné à compenser le temps de calcul du circuit de calibrage d'impulsions 14 sur une période Baud. Il détermine le niveau pris majoritairement par le signal d'écartométrie Σ / Δ au milieu des intervalles de temps de 0,5 µs d'un bloc de données d'une réponse où le circuit de calibrage d'impulsions 14 a reconnu des impulsions de données puis adopte pour, niveau de référence la moyenne des valeurs de niveau appartenant à une plage de valeurs atteintes par les niveaux un nombre de fois au moins égal à la moitié de celui où est atteinte la valeur du niveau majoritaire. Pour ce faire, il comporte un ensemble de compteurs, en nombre égal aux différentes valeurs possibles de niveau, qui sont adressés par la valeur du niveau de signal échantillonné au milieu de chaque intervalle de temps de 0,5 µs d'un bloc de données où le circuit de calibrage d'impulsions 14 a reconnu des impulsions de données et incrémenté à chaque fois d'une unité, et un circuit logique d'analyse de l'histogramme des échantillons de niveau inscrits dans l'ensemble des compteurs qui délimite en fin de chaque bloc de données une plage de compteurs situés de part et d'autre du compteur renfermant la valeur maximale et ayant des contenus supérieurs ou égaux à la moitié de cette valeur maximale pour rejeter de l'histogramme les valeurs de niveau erronées ne correspondant manifestement pas à des impulsions de données et qui détermine la moyenne des valeurs de niveau adressant des compteurs dans ladite plage.

La mémoire 22 placée en tampon en sortie du circuit de calibrage 14 stocke, pendant toute la durée d'une réponse en mode S soit 56 µs pour une réponse courte ou 112 µs pour une réponse longue, les 112 ou 224 échantillons, pris tous les intervalles de temps de 0,5 µs d'un bloc de données, de chacun des signaux d'impulsions calibrées de bloc de données f(QΣ) et d'informations de qualité i(QΣ) délivrés par le circuit de calibrage 14. Elle reçoit pour ce faire de la base de temps 13 des ordres d'écriture engendrés régulièrement tous les intervalles de temps de 0,5 µs d'un bloc de données d'une réponse en mode S en cours de réception, avec un délai de retard tenant compte du temps de traitement du circuit de calibrage 14.

La mémoire 23 placée en tampon en sortie du convertisseur analogique/numérique 30 stocke, pendant toute la durée d'une réponse en mode S, les 112 ou 224 échantillons du signal de réception Log Σ pris au milieu de chaque intervalle de temps de 0,5 µs d'un bloc de données en cours de réception. Elle reçoit pour ce faire de la base de temps 13 des ordres d'écriture engendrés régulièrement au milieu de tous les intervalles de temps de 0,5 µs d'un bloc de données de réponse en mode S en cours de réception.

La mémoire 24 placée en tampon en sortie du convertisseur analogique/numérique 33 stocke, pendant toute la durée d'une réponse en mode S les 112 ou 224 échantillons du signal d'écartométrie Σ/Δ pris au milieu de chaque intervalle de temps de 0,5 µs d'un bloc de données en cours de réception. Elle reçoit pour ce faire de la base de temps 13 les mêmes ordres d'écriture que la mémoire 23.

Le circuit de détection 25 est connecté à la suite de la batterie de mémoires 22, 23, 24, du circuit de calibrage d'impulsions 14, du circuit 201 de détermination d'un niveau de référence du signal de réception LogΣ et du circuit 21 de détermination d'un niveau de référence du signal d'écartométrie. Il comporte un séquenceur logique déclenché par la base de temps 13 en fin de réception d'un bloc de données d'une réponse en mode S qui vient relire une à une les valeurs des échantillons du signal de réception Log Σ et du signal d'écartométrie Σ/Δ stockées dans les mémoires 23, 24 ainsi que les signaux d'impulsions calibrées de bloc de données f(QΣ) et d'information de qualité i(QΣ) qui sont stockés dans la mémoire 22 et correspondent à chaque échantillon, et analyse sur chaque période Baud du bloc de données (deux intervalles de temps successifs de 0,5 µs) les signaux délivrés par le circuit de calibrage 14.

A chaque information de qualité correcte sur une période Baud, le circuit de détection 25 transmet sans les modifier le signal d'impulsions calibrées de bloc de données f(QΣ) et l'information de qualité i(QΣ) à destination d'un calculateur qui décode le bloc de données.

A chaque information de qualité incorrecte sur une période Baud le circuit de détection 25 essaye de corriger le signal d'impulsions calibrées de bloc de données f(QΣ) et l'information de qualité i(QΣ) avant de les transmettre au calculateur qui décode le bloc de données. Pour ce faire il effectue une comparaison des deux échantillons mémorisés du signal de réception Log Σ, qui correspondent à la période Baud considérée avec la valeur de référence du signal de réception LogΣ . Si la différence est inférieure à un certain seuil pour l'un des échantillons mémorisés du signal de réception LogΣ , l'impulsion calibrée est placée sur l'intervalle de temps de 1 µs correspondant à cet échantillon et l'information de qualité est changée en information de qualité correcte. Si ce n'est pas le cas les deux échantillons mémorisés du signal de réception Log Σ ne répondant pas au test ou y répondant simultanément, le circuit de détection 25 procède à une comparaison des deux échantillons mémorisés du signal d'écartométrie Σ / Δ qui correspondent à la période Baud considérée avec la valeur de référence du signal d'écartométrie. Si la différence est inférieure à un certain seuil pour l'un des échantillons mémorisés du signal d'écartométrie, l'impulsion calibrée est placée sur l'intervalle de temps de 1 µs correspondant à cet échantillon et l'information de qualité est changée en une information de qualité correcte. Si ce n'est pas le cas, les deux échantillons mémorisés du signal d'écartométrieΣ /Δ ne répondant pas au test ou y répondant simultanément, le circuit de détection 25 transmet sans les modifier le signal d'impulsion calibrée de bloc de données f(QΣ) et l'information de qualité incorrecte i(QΣ) en laissant le soin au calculateur qui décode le bloc de données de corriger l'information erronée à l'aide de la redondance du code.

On peut, sans sortir du cadre de l'invention modifier certaines dispositions ou remplacer certains moyens par des moyens équivalents. On peut notamment supprimer le dispositif de mise en forme 1, le dispositif de détection ayant alors son propre circuit d'identification de format et sa propre base de temps, et un circuit de détection d'impulsion 25 fonctionnant sur chaque période Baud d'un bloc de données de réponse en mode S comme ce serait le cas s'il recevait constamment une information de qualité i(QΣ) incorrecte et engendrant alors les impulsions calibrées de bloc de donnée f(QΣ) et une information de qualité i(QΣ). La dispositif de détection 2 peut être simplifié et ne pas comporter la chaîne de traitement relative au signal d'écartométrie Σ/Δ. De même, toujours dans un but de simplification, les circuits de détermination des niveaux de référence (201, 21) peuvent adopter comme niveau de référence le niveau pris majoritairement par le signal considéré sur les intervalles de temps de 0,5 µs du bloc de données occupés par des impulsions présumées et ne pas rechercher de valeurs moyennes. En outre, les seuils adoptés pour les différentes comparaisons peuvent ne pas être fixes mais asservis à la puissance de la réponse reçue pour tenir compte de l'amplitude variable du bruit.

## Revendications

1. Dispositif de détection des signaux de répondeurs interrogés par un radar secondaire en présence de phénomènes de multitrajets, chaque signal de répondeur étant formé d'un train d'impulsions arrangé selon un format déterminé avec des impulsions de formatage repérant la position d'impulsions de données, et étant contenu dans un signal de réception délivré par le radar secondaire, comprenant
un circuit (12) d'identification de format d'un signal de répondeur comportant des moyens de détection des impulsions de formatage contenus dans le signal de réception,
caractérisé en ce qu'il comporte :
- une base de temps (13) synchronisée par le circuit (12) d'identification de format comportant des moyens pour engendrer des signaux de cadencement repérant dans le signal de réception les intervalles de temps éventuellement occupés par des impulsions de données d'un signal de répondeur, leurs milieux ainsi que des plages centrées sur ces milieux,
- et un dispositif (2) de détection d'impulsions de données dans le signal de réception comprenant lui-même :
- un circuit (200) de détermination de présomption d'impulsions de données dans le signal de réception, cadencé par la base de temps (13), comportant des moyens pour établir une corrélation entre un premier échantillon du niveau du signal de réception pris au milieu de chaque intervalle de temps éventuellement occupé par une impulsion de données d'un signal de répondeur et un deuxième et un troisième échantillons du niveau du signal de réception pris au cours de ces mêmes intervalles de temps en des instants encadrant celui de prise du premier échantillon, et des moyens pour engendrer un coefficient de pondération associé à chaque valeur prise par le premier échantillon représentant une probabilité de présence d'impulsion de donnée d'autant plus grande que ladite corrélation est élevée,
- un circuit (201) de détermination d'un niveau de référence du signal de réception déterminant un niveau de référence d'impulsions pour chacun des signaux de répondeur dont le format a été identifié dans le signal de réception par le circuit (12) d'identification de format, cadencé par la base de temps (13) et comportant des moyens pour sélectionner le niveau pris majoritairement par le signal de réception au milieu des intervalles de temps éventuellement occupés par des impulsions de données d'un signal de répondeur en pondérant la fréquence d'apparition des niveaux considérés par les coefficients de pondération élaborés par le circuit (200) de détermination de présomption d'impulsions de données et,
- un circuit (25) de détection d'impulsions de données pour chacun des signaux de répondeur dont le format a été identifié dans le signal de réception par le circuit (12 ) d'identification de format, comportant des moyens de reconnaissance d'impulsion dans le signal de réception chaque fois que le niveau du signal de réception au milieu d'un intervalle de temps éventuellement occupé par une impulsion appartient à une certaine plage de valeurs centrée autour du niveau de référence délivré par le circuit de détermination du niveau de référence du signal de réception pour le signal de répondeur considéré.

2. Dispositif selon la revendication 1, caractérisé en ce que le circuit (201) de détermination du niveau de référence du signal de réception comporte en outre des moyens déterminant ledit niveau de référence à partir de la moyenne des valeurs qui sont prises, avec des fréquences pondérées par les coefficients de pondération élaborés par le circuit (200) de détermination de présomption d'impulsions de données, par les niveaux du signal de réception au milieu des intervalles de temps éventuellement occupés par des impulsions de données d'un signal de répondeur et qui appartiennent à une plage de valeurs atteintes un nombre de fois égal, compte tenu des coefficients de pondération, au moins à la moitié du nombre de fois où est atteinte la valeur du niveau majoritaire.

3. Dispositif selon la revendication 1, utilisé avec des répondeurs fournissant un signal de réponse comportant des impulsions de données modulées en position, occupant chacune l'un ou l'autre de deux intervalles de temps successifs formant une période Baud, caractérisé en ce qu'il comporte en outre un circuit (1) de remise en forme d'impulsions de données comportant des moyens de calibrage d'impulsions chaque fois que le niveau moyen du signal de réception dans l'un des deux intervalles de temps d'une période Baud est supérieur d'une certaine valeur de seuil au niveau moyen du signal de réception dans l'autre intervalle de temps de la période Baud considérée, et en ce que le dispositif (2) de détection d'impulsions de données dans le signal de réception n'est déclenché que sur les périodes Baud où le circuit (1) de remise en forme n'a pas détecté une impulsion unique.

4. Dispositif selon la revendication 3, utilisé avec un radar secondaire monopulse délivrant en plus du signal de réception un signal d'écartométrie dans lequel apparaissent les signaux des répondeurs, caractérisé en ce qu'il comporte en outre dans le dispositif (2) de détection d'impulsions de données :
- un circuit (21) de détermination d'un niveau de référence du signal d'écartométrie déterminant un niveau de référence d'impulsions pour chacun des signaux de répondeur qui apparaissent dans le signal d'écartométrie et dont le format a été identifié par le circuit (12) d'identification de format, cadencé par un signal de rythme qui repère le milieu des intervalles de temps où une impulsion a été détectée par le circuit (1) de remise en forme et qui est délivré par la base de temps sous le contrôle du circuit (1) de remise en forme, et comportant des moyens pour sélectionner le niveau pris majoritairement par le signal d'écartométrie au milieu des intervalles de temps occupés par des impulsions détectées par le circuit (1) de remise en forme
et en ce que le circuit (25) de détection d'impulsions de données comporte en outre des moyens de reconnaissance d'impulsion dans le signal d'écartométrie chaque fois que le niveau du signal d'écartométrie au milieu d'un intervalle de temps éventuellement occupé par une impulsion de données appartient à une certaine plage de valeur centrée autour du niveau de référence du signal d'écartométrie.

5. Dispositif selon la revendication 4, caractérisé en ce que les moyens de reconnaissance d'impulsion dans le signal d'écartométrie ne fonctionnent que sur les périodes Baud où le circuit (1) de remise en forme et les moyens de reconnaissance d'impulsion dans le signal de réception n'ont pas détecté d'impulsion unique.

6. Dispositif selon la revendication 4, caractérisé en ce que le circuit (21) de détermination du niveau de référence du signal d'écartométrie comporte en outre des moyens déterminant ledit niveau de référence à partir de la moyenne des valeurs qui sont prises par le niveau du signal d'écartométrie au milieu des intervalles de temps occupés par des impulsions de données détectées par le circuit (1) de remise en forme et qui appartiennent à une plage de valeurs atteintes un nombre de fois au moins égal à la moitié de celui où est atteinte la valeur majoritaire.

## Claims

1. Apparatus for detecting signals from responders interrogated by a secondary radar in the presence of multipath phenomena, each responder signal being formed by a train of pulses arranged in a specified format with formatting pulses labelling the position of data pulses, and being contained in a reception signal delivered by the secondary radar, comprising
a circuit (12) for identifying the format of a responder signal including means for detecting the formatting pulses contained in the reception signal,
characterized in that it includes:
- a time base (13) synchronized by the format identification circuit (12) including means for generating clocking signals labelling, within the reception signal, the time intervals which are possibly occupied by data pulses of a responder signal, their middles as well as regions centred on these middles,
- and an apparatus (2) for detecting data pulses in the reception signal itself comprising:
- a circuit (200) for determining the presumption of data pulses in the reception signal, clocked by the time base (13), including means for establishing a correlation between a first sample of the level of the reception signal taken at the middle of each time interval which is possibly occupied by a data pulse of a responder signal and a second and a third samples of the level of the reception signal taken during these same time intervals at instants bracketing that of the taking of the first sample, and means for generating a weighting coefficient associated with each value taken by the first sample representing a data pulse presence probability which is all the greater the higher the said correlation,
- a circuit (201) for determining a reference level of the reception signal which determines a pulse reference level for each of the responder signals whose format has been identified in the reception signal by the format identification circuit (12), clocked by the time base (13) and including means for selecting the level taken predominantly by the reception signal at the middle of the time intervals which are possibly occupied by data pulses of a responder signal by weighting the frequence of appearance of the levels in question by their weighting coefficients computed by the circuit (200) for determining the presumption of data pulses and,
- a circuit (25) for detecting data pulses for each of the responder signals whose format has been identified in the reception signal by the format identification circuit (12), including means for recognizing a pulse in the reception signal whenever the level of the reception signal at the middle of a time interval which is possibly occupied by a pulse belongs to a certain range of values centred around the reference level delivered by the circuit for determining the reference level of the reception signal for the responder signal in question.

2. Apparatus according to Claim 1, characterized in that the circuit (201) for determining the reference level of the reception signal furthermore includes means determining the said reference level from the mean of the values which are taken, with frequencies weighted by the weighting coefficients computed by the circuit (200) for determining the presumption of data pulses, by the levels of the reception signal at the middle of the time intervals which are possibly occupied by data pulses of a responder signal and which belong to a range of values which are attained a number of times which is equal, taking into account the weighting coefficients, to at least half the number of times for which the value of the predominant level is attained.

3. Apparatus according to Claim 1, used with responders providing a response signal including data pulses modulated in position, each pulse occupying one or the other of two successive time intervals forming a Baud period, characterized in that it furthermore includes a circuit (1) for reshaping data pulses including means for calibrating pulses each time the mean level of the reception signal in one of the two time intervals of a Baud period is greater by a certain threshold value than the mean level of the reception signal in the other time interval of the Baud period in question, and in that the apparatus (2) for detecting data pulses in the reception signal is triggered only over the Baud periods in which the reshaping circuit (1) has not detected a lone pulse.

4. Apparatus according to Claim 3, used with a monopulse secondary radar delivering, in addition to the reception signal, a deviation measurement signal in which the signals from the responders appear, characterized in that it furthermore includes in the data pulse detection apparatus (2):
- a circuit (21) for determining a reference level of the deviation measurement signal which determines a pulse reference level for each of the responder signals which appear in the deviation measurement signal and whose format has been identified by the format identification circuit (12), clocked by a timing signal which labels the middle of the time intervals in which a pulse has been detected by the reshaping circuit (1) and which is delivered by the time base under the supervision of the reshaping circuit (1), and including means for selecting the level taken predominantly by the deviation measurement signal at the middle of the time intervals occupied by pulses detected by the reshaping circuit (1) and in that the data pulse detection (25) furthermore includes means for pulse recognition in the deviation measurement signal each time the level of the deviation measurement signal at the middle of a time interval which is possibly occupied by a data pulse belongs to a certain value range centred around the reference level of the deviation measurement signal.

5. Apparatus according to Claim 4, characterized in that the means for pulse recognition in the deviation measurement signal operate only over the Baud periods in which the reshaping circuit (1) and the means for pulse recognition in the reception signal have not detected a lone pulse.

6. Apparatus according to Claim 4, characterized in that the circuit (21) for determining the reference level of the deviation measurement signal furthermore includes means which determine the said reference level from the mean of the values which are taken by the level of the deviation measurement signal at the middle of the time intervals occupied by data pulses detected by the reshaping circuit (1) and which belong to a range of values attained a number of times at least equal to half that for which the predominant value is attained.

## Patentansprüche

1. Einrichtung für die Erfassung von Signalen von von einem Sekundärradar abgefragten Anwortgeräten bei Anwesenheit von Mehrfachdurchlauf-Phänomenen, wobei jedes Anwortgerät-Signal aus einem Impulszug, der gemäß einem bestimmten Format angeordnet ist, in dem Formatierungsimpulse die Position der Datenimpulse markieren, gebildet und in einem vom Sekundärradar ausgegebenen Empfangssignal enthalten ist, mit
einer Schaltung (12) zur Identifikation des Formats eines Antwortgerät-Signals, die Mittel für die Erfassung der in dem Empfangssignal enthaltenen Formatierungsimpulse enthält;
dadurch gekennzeichnet, daß sie umfaßt:
- einer Zeitablaufsteuerung (13), die durch die Formatidentifizierungsschaltung (12) synchronisiert ist und Mittel für die Erzeugung von Zeitablaufsteuersignalen enthält, die in dem Empfangssignal die von den Datenimpulsen eines Antwortgerät-Signals eventuell belegten Zeitintervalle, deren Mitten sowie um diese Mitten zentrierte Bereiche markieren,
- und eine Einrichtung (2) für die Erfassung von Datenimpulsen in dem Empfangssignal, die ihrerseits umfaßt:
- eine Schaltung (200) für die Bestimmung der Vermutung von Datensignalen in dem Empfangssignal, die von der Zeitablaufsteuerung (13) zeitlich gesteuert wird und versehen ist mit Mitteln für die Herstellung einer Korrelation zwischen einem ersten Abtastwert des Pegels des Empfangssignals, der in der Mitte eines jeden von einem Datenimpuls eines Antwortgerät-Signals eventuell belegten Zeitintervalls entnommen wird, und einem zweiten und einem dritten Abtastwert des Pegels des Empfangssignals, die während derselben Zeitintervalle in Zeitpunkten entnommen werden, die jenen des ersten Abtastwerts umgeben, und Mitteln für die Erzeugung eines Gewichtungskoeffizienten, der jedem bei der ersten Abtastung abgetasteten Wert zugeordnet wird und eine Wahrscheinlichkeit des Vorhandenseins eines Datenimpulses darstellt, die umso größer ist, je höher die Korrelation ist,
- eine Schaltung (201) für die Bestimmung eines Referenzpegels des Empfangssignals, die einen Pegel von Referenzimpulsen für jedes der Antwortgerät-Signale bestimmt, deren Format in dem Empfangssignal in der Formatidentifizierungsschaltung (12) identifiziert worden ist, wobei die Bestimmungsschaltung (201) von der Zeitablaufsteuerung (13) zeitlich gesteuert wird und Mittel enthält, um den Pegel auszuwählen, der in dem Empfangssignal in der Mitte der von den Datenimpulsen eines Antwortgerät-Signals eventuell belegten Zeitintervalle mehrheitlich abgetastet wird, indem die Auftrittshäufigkeit der betrachteten Pegel durch die Gewichtungskoeffizienten gewichtet wird, welche von der Schaltung (200) für die Bestimmung der Vermutung von Datenimpulsen entwickelt werden, und
- eine Schaltung (25) für die Erfassung von Datenimpulsen für jedes Antwortgerät-Signal, dessen Format in dem Empfangssignal von der Formatidentifizierungsschaltung (12) identifiziert worden ist, mit Mitteln für die Wiedererkennung eines Impulses in einem Empfangssignal jedesmal dann, wenn der Pegel des Empfangssignals in der Mitte eines von einem Impuls eventuell belegten Zeitintervalls einem bestimmten Wertebereich zugehört, der um den Referenzpegel zentriert ist, der von der Schaltung für die Bestimmung des Referenzpegels des Empfangssignals für das betrachtete Anwortgerät-Signal ausgegeben wird.

2. Einrichtung gemäß Anspruch 1, dadurch gekennzeichnet, daß die Schaltung (201) für die Bestimmung des Referenzpegels des Empfangssignals außerdem Mittel umfaßt, die den Referenzpegel anhand des Mittelwertes von Werten bestimmen, welche an den Pegeln des Empfangssignals in der Mitte der von den Datenimpulsen eines Antwortgerät-Signals eventuell belegten Zeitintervallen mit Häufigkeiten abgetastet werden, die mit den Gewichtungskoeffizienten gewichtet sind, die von der Schaltung (200) für die Bestimmung der Vermutung von Datenimpulsen gebildet werden, und die einem Bereich von Werten zugehören, die unter Berücksichtigung der Gewichtungskoeffizienten wenigstens halb so oft erreicht werden, wie der Wert des am häufigsten vorkommenden Pegels erreicht wird.

3. Einrichtung gemäß Anspruch 1, die mit Antwortgeräten verwendet wird, die ein Antwortsignal ausgeben, das positionsmodulierte Datenimpulse umfaßt, die jeweils das eine oder das andere von zwei aufeinanderfolgenden Zeitintervallen belegen, die eine Baud-Periode bilden, dadurch gekennzeichnet, daß sie außerdem eine Schaltung (1) für die Wiederherstellung der Form von Datenimpulsen besitzt, die Mittel enthält, die jedesmal dann, wenn der mittlere Pegel des Empfangssignals in einem der beiden Zeitintervalle einer Baud-Periode um einen bestimmten Schwellenwert größer als der mittlere Pegel des Empfangssignals in dem anderen Zeitintervall der betrachteten Baud-Periode ist, Impulse eichen, und daß die Einrichtung (2) für die Erfassung der Datenimpulse in dem Empfangssignal nur in den Baud-Perioden ausgelöst wird, in denen die Formwiederherstellungsschaltung (1) keinen einzigen Impuls erfaßt hat.

4. Einrichtung gemäß Anspruch 3, die mit einem Einzelimpuls-Sekundärradar verwendet wird, der zusätzlich zu dem Empfangssignal ein Abstandssignal ausgibt, in dem die Signale der Antwortgeräte auftreten, dadurch gekennzeichnet, daß sie außerdem in der Einrichtung (2) für die Erfassung von Datenimpulsen umfaßt:
- eine Schaltung (21) für die Bestimmung eines Referenzpegels des Abstandssignals, die einen Impuls-Referenzpegel für jedes der Antwortgerät-Signale bestimmt, die in dem Abstandssignal auftreten und deren Format von der Formatidentifizierungsschaltung (12) identifiziert worden ist, wobei die Schaltung (21) von einem Taktsignal, das die Mitte der Zeitintervalle markiert, wo ein Impuls von der Fromwiederherstellungsschaltung (1) erfaßt worden ist, zeitlich gesteuert wird, wobei dieses Taktsignal von der Zeitablaufsteuerung unter der Steuerung der Formwiederherstellungsschaltung (1) ausgegeben wird, und wobei die Schaltung (21) Mittel zum Auswählen des Pegels enthält, der von dem Abstandssignal in der Mitte der von den von der Formwiederherstellungsschaltung (1) erfaßten Impulsen belegten Zeitintervalle mehrheitlich abgetastet wird,
und daß die Schaltung (25) für die Erfassung von Datenimpulsen außerdem Mittel umfaßt, die jedesmal dann, wenn der Pegel des Abstandssignals in der Mitte eines von einem Datenimpuls eventuell belegten Zeitintervalls einem bestimmten Wertebereich zugehört, der um den Referenzpegel des Abstandssignals zentriert ist, Impulse in dem Abstandssignal wiedererkennen.

5. Einrichtung gemäß Anspruch 4, dadurch gekennzeichnet, daß die Mittel für die Wiedererkennung von Impulsen in dem Abstandssignal nur in den Baud-Perioden arbeiten, wo die Formwiederherstellungsschaltung (1) und die Mittel für die Wiedererkennung von Impulsen im Empfangssignal keinen einzigen Impuls erfaßt haben.

6. Einrichtung gemäß Anspruch 4, dadurch gekennzeichnet, daß die Schaltung (21) für die Bestimmung des Referenzpegels des Abstandssignals außerdem Mittel enthält, die den Referenzpegel anhand des Mittelwertes von Werten bestimmen, die durch den Pegel des Abstandssignals in der Mitte der Zeitintervalle, die von von der Formwiederherstellungsschaltung (1) erfaßten Datenimpulsen belegt sind, abgetastet werden und die einem Bereich von Werten zugehören, die wenigstens halb so oft erreicht werden wie der mehrheitliche Wert erreicht wird.
